# FASCICULE DE BREVET EUROPEEN

(11) **EP 2 469 672 B1**
(45) Date de publication et mention de la délivrance du brevet: **17.05.2017**
(21) Numéro de dépôt: 11194397.3
(22) Date de dépôt: 19.12.2011
(51) Int. Cl.: H02G 3/10, H02B 1/052

(54) **Dispositif de fixation d'un module de raccordement électrique par encliquetage sur un rail ou un support percé**
Befestigungsvorrichtung eines elektrischen Anschlussmoduls zum Einrasten auf einer Schiene oder einer durchbohrten Halterung
Device for attaching an electric connection module by snap fitting onto a rail or a bored mounting

(30) Priorité: 23.12.2010 FR 1061219
(43) Date de publication de la demande: 27.06.2012
(73) Titulaire: Amphenol Air LB, 08110 Blagny (FR)
(72) Inventeur: Sence, Jérôme, 08200 Balan (FR)
(74) Mandataire: Delprat, Olivier

(56) Documents cités:
- DE-U1- 29 614 256
- GB-A- 2 187 901
- GB-A- 2 282 702
- US-A1- 2006 021 777

## Description

L'invention concerne les systèmes de raccordement électrique, et, notamment, les systèmes de raccordement étanches à jonction rapide. Plus particulièrement, l'invention se rapporte au montage d'un module de raccordement électrique sur un rail par encliquetage pour constituer une barrette modulaire de dispositifs de raccordement, ou sur un support perforé.

Les systèmes de raccordement électrique comportent généralement un rail de support, par exemple métallique ou réalisé à partir d'un matériau composite, sous la forme d'un profilé en U comprenant deux ailes longitudinales entre lesquelles sont maintenues des modules de raccordement électrique.

Les modules de raccordement électrique, quant à eux, présentent une forme générale parallélépipédique et comportent deux faces, antérieure et postérieure, conformées de manière à coopérer avec les ailes longitudinales du rail.

Dans un mode de réalisation connu, les ailes sont chacune pourvues d'un rebord supérieur rentrant tandis que les faces antérieure et postérieure des modules sont chacune pourvues d'une gorge dans laquelle s'engage un rebord correspondant. Le rail constitue ainsi une glissière dans laquelle les modules peuvent être insérées successivement pour former une barrette de modules de raccordement. Le montage de chaque module s'effectue en l'orientant par rapport à l'axe longitudinal du rail de manière à permettre son insertion entre les deux ailes selon un mouvement généralement perpendiculaire au plan général du rail puis en,insérant, par rotation, les rebords dans les gorges des faces antérieure et postérieure des modules jusqu'à ce que les modules adoptent une position transversale. Les modules ainsi formés sont alors maintenus en position en utilisant des butées à vis longitudinalement déplaçables sur le rail qui viennent se monter de part et d'autre de la barrette de modules.

Lorsque l'on souhaite ajouter un module, il convient de desserrer la vis de l'une des butées, de l'écarter de la barrette, et d'insérer un nouveau module puis de resserrer le rail.

Comme on le conçoit, ce type d'agencement permet un maintien efficace et fiable des modules et permet de disposer d'un système de raccordement électrique relativement compact. Toutefois, la présence des butées nécessaires au maintien de la barrette de modules augmente le nombre de pièces constitutives du système de raccordement et, par conséquent, son coût de fabrication, et complique le montage des modules. Il n'est en particulier pas possible de démonter un module médian sans devoir au préalable démonter les modules latéraux.

Dans le document EP 0 756 364 est décrit un système de raccordement électrique dans lequel le maintien axial des barrettes est réalisé en formant les moyens d'encliquetage comprenant, d'une part, une rainure pourvue d'un bossage médian pratiqué dans la face postérieure des modules et, d'autre part, une nervure pourvue d'une échancrure médiane ménagée dans la deuxième aile du rail, l'insertion du bossage médian dans l'échancrure assurant un maintien axial des modules.

Comme on le conçoit, ce type de configuration complique la réalisation du boîtier, des modules et du rail.

Le document FR 2 796 630 décrit un système dissociant les moyens d'encliquetage des modules sur le rail et les moyens de maintien axial des modules de raccordement. Plus particulièrement, il décrit un module de raccordement électrique comprenant un boîtier comprenant une première face munie d'un bossage destiné à s'engager dans une empreinte pratiquée dans une aile longitudinale d'un rail profilé en U, et une deuxième face opposée pourvue de moyens d'encliquetage complémentaires pratiqués dans une deuxième aile du rail. Le module comporte en outre une surface de fond munie extérieurement d'au moins une butée s'étendant généralement perpendiculairement auxdites première et deuxième faces et destinée à coopérer avec une butée complémentaire pratiquée dans le fond du rail.

Cependant, un tel dispositif ne permet d'assembler sur les rails que des modules de raccordement électrique configurés pour coopérer avec de tels rails. Les raccordements électriques ne possédant pas une telle configuration ne peuvent être fixés sur de tels rails.

On pourra enfin se référer au document GB 2 282 702 qui décrit un dispositif de fixation d'un module de raccordement électrique de conducteurs comprenant une embase dotée de deux branches latérales s'étendant en saillie à partir de l'embase pour recevoir un module de raccordement électrique.

Le but de l'invention est donc de pallier les inconvénients des systèmes de raccordement électrique en proposant un système de fixation permettant d'assembler, sur une structure telle qu'un rail, un module de raccordement électrique dépourvu d'une configuration spécifique à une fixation sur rail.

L'invention a donc pour objet un dispositif de fixation d'un module de raccordement électrique de conducteurs comprenant une embase comportant des moyens de fixation destinés à coopérer avec des moyens de fixation complémentaire prévus sur un support et deux branches latérales s'étendant en saillie en regard l'une de l'autre à partir de l'embase et comprenant des moyens de réception du module de raccordement électrique.

Le support peut être un rail capable de recevoir des dispositifs de fixations de façon à réaliser une barrette d'une pluralité de modules fixés sur des dispositifs de fixation. Le support peut également être une structure comportant des trous dans lesquels peuvent se loger des pions.

De plus, les deux branches latérales en saillie définissent ensemble des moyens de réception d'un module de raccordement électrique.

Chaque branche latérale comporte une première extrémité s'étendant à partir de l'embase et une seconde extrémité opposée libre, chaque branche latérale comportant une fente verticale s'étendant de la première extrémité et débouchant au niveau de la seconde extrémité, la fente étant destinée à recevoir une portion en saillie du module de raccordement électrique.

Une portion en saillie du module de raccordement électrique, telle qu'une collerette, peut ainsi être insérée dans la fente de chaque branche latérale.

Selon l'invention, la seconde extrémité de chaque branche latérale comporte un élément de verrouillage capable de maintenir ladite portion du module de raccordement électrique dans la fente.

L'élément de verrouillage peut avantageusement comprendre une butée d'extrémité contre laquelle s'appuie une portion correspondante de ladite portion en saillie du module de raccordement électrique sous l'action des éléments de compensation de jeu.

L'embase peut avantageusement comporter, au niveau de l'une des faces destinée à être tournée à l'opposé du support, des éléments de compensation de jeu aptes à solliciter ladite portion en saillie du module de raccordement électrique vers les éléments de verrouillages.

Les éléments de compensation de jeu permettent ainsi de compenser la différence entre la hauteur de ladite portion du module de raccordement électrique inséré dans la fente et la hauteur entre la seconde face de l'embase et l'élément de verrouillage, les moyens de compensation de jeu comportant au moins une butée moulée dans l'embase de façon à posséder une élasticité intrinsèque permettant à la butée d'être rehaussée par rapport la seconde face de l'embase.

Une portion en saillie d'un module de raccordement électrique, telle qu'une collerette, peut ainsi être maintenue dans la fente de la portion latérale entre l'élément de verrouillage et la butée des moyens de compensation de jeu.

Dans un mode de réalisation, ladite embase comprend préférentiellement au moins un bossage destiné à s'engager dans une empreinte correspondante pratiquée dans un rail en forme de U, au moins un élément d'encliquetage disposé à l'opposé du bossage et adapté pour coopérer avec un élément d'encliquetage complémentaire pratiqué dans le rail, au moins une butée de verrouillage axial étant destinée à coopérer avec un élément de verrouillage axial complémentaire pratiqué dans le rail.

De préférence, le bossage est pratiqué à la base de l'embase Avantageusement, le bossage est pratiqué sous la butée de verrouillage axial.

L'élément d'encliquetage peut en outre comporter une rainure dans laquelle s'engage au moins une nervure d'encliquetage de l'élément d'encliquetage complémentaire pratiquée dans la deuxième aile du rail.

Dans un autre mode de réalisation, ladite embase comprend au moins un pion fixe en saillie, à partir de l'une des faces de l'embase destinée à être tournée vers le support et à coopérer chacun avec un orifice pratiqué dans le support, et un pion mobile associé à des moyens élastiques tendant à écarter le pion mobile dudit au moins un pion fixe de manière à exercer un effort de maintien des pions dans les orifices.

Avantageusement, le pion mobile peut être porté par un tiroir mobile par rapport à l'embase entre une position active de maintien du dispositif dans le support et une position initiale de compression des moyens élastiques et de libération du dispositif.

D'autres avantages et caractéristiques de l'invention apparaîtront à l'examen de la description détaillée d'un mode de réalisation, nullement limitatif, et des dessins annexés, sur lesquels :
- la figure 1 représente une vue en perspective d'un dispositif de fixation selon un premier mode de réalisation ;
- les figures 2 et 3 présentent respectivement une vue de profil et une vue de dessus du dispositif de fixation de la figure 1 ;
- la figure 4 présente une vue en perspective d'un assemblage d'un dispositif de fixation de la figure 1 sur un premier rail ;
- la figure 5 illustre le dispositif de fixation de la figure 1 assemblé avec un premier rail ;
- la figure 6 est une vue de l'assemblage de la figure 5 ayant subi une rotation de 180° ;
- la figure 7 illustre l'assemblage d'un dispositif de fixation de la figure 1 avec un second rail ;
- les figures 8a à 8e illustrent un synopsis d'un assemblage d'un module de raccordement électrique sur un dispositif de fixation selon le premier mode de réalisation ;
- la figure 9 représente en perspective une vue de dessous d'un dispositif de fixation selon un second mode de réalisation ;
- la figure 10 représente en perspective une vue de dessus du dispositif de fixation de la figure 9.

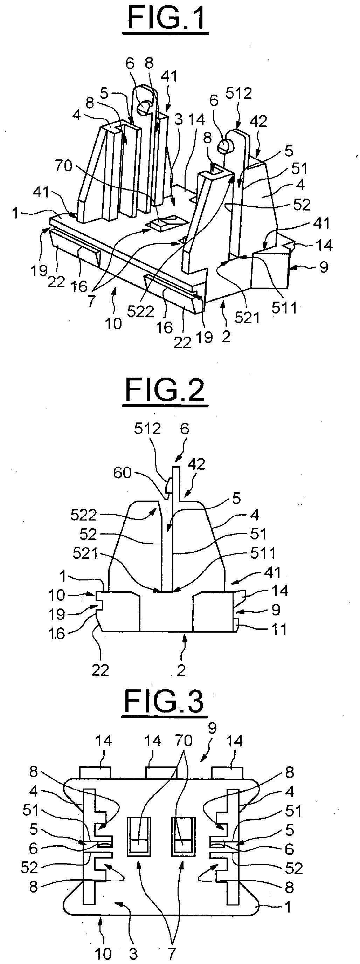

Les figures 1 à 3 illustrent respectivement une vue en perspective, une vue de profil et une vue de dessus d'un dispositif de fixation d'un module de raccordement électrique selon un premier mode de réalisation.

Le dispositif de fixation comprend une embase 1 comportant une première face 2 destinée à être tournée vers le support et une seconde face 3 opposée à la première face 2. La seconde face 3, opposée à la première face 2, comprend deux branches latérales 4 en saillie s'étendant en regard l'une de l'autre à partir de l'embase 1. Les deux branches latérales 4 comprennent des moyens de réception dru module de raccordement électrique.

Chacune des branches latérales 4 en saillie comporte une première extrémité 41 s'étendant à partir de la seconde face 3 de l'embase 1 et une seconde extrémité opposée libre 42. Chaque branche latérale 4 comporte une fente 5 verticale s'étendant de la première extrémité 41 et débouchant au niveau de la seconde extrémité 42.

La fente 5 ainsi prévue dans chaque branche latérale 4 permet de recevoir une portion en saillie du module de raccordement électrique telle qu'une collerette d'un connecteur électrique.

La fente 5 de chaque branche latérale 4 sépare une première paroi 51 d'une seconde paroi 52 de la branche latérale 4. Les première et seconde parois 51 et 52 comportent chacune une première extrémité 511 et 521 s'étendant à partir de la seconde face 3 de l'embase 1 et une seconde extrémité 512 et 522 opposée. La seconde extrémité 512 de la première paroi 51 est réalisée de manière à s'étendre plus haut que la seconde extrémité 522 de la seconde paroi 52.

La seconde extrémité 512 de la première paroi 51 de chaque branche latérale 4 comporte également un élément de verrouillage 6 capable de maintenir ladite portion du module de raccordement électrique dans la fente 5. L'élément de verrouillage 6 comporte une partie en saillie parallèlement à la seconde surface 3 formant une butée d'extrémité 60. L'élément de verrouillage 6 est réalisé de façon à être plus élevé que la seconde extrémité 522 de la seconde paroi 52 de chaque branche latérale 4.

La seconde face 3 de l'embase 1 comporte des éléments de compensation de jeu 7 disposés entre les branches latérales 4, et plus particulièrement entre les fentes 5 des branches latérales 4. Les moyens de compensation de jeu 7 sont capables de compenser la différence entre la hauteur de la portion du module de raccordement électrique inséré dans la fente 5 et la hauteur entre la seconde face 3 de l'embase 1 et l'élément de verrouillage 6.

Les moyens de compensation de jeu 7 comportent deux butées 70 moulées dans l'embase 1 de façon à posséder une élasticité intrinsèque permettant aux butées 70 d'être rehaussée par rapport la seconde face 3 de l'embase 1. Pour cela, les butées 70 possèdent une forme relativement parallélépipédique dans le plan de la seconde surface 3 de l'embase 1 et ne sont connectées à l'embase 1 que par un côté dont l'épaisseur est réduite par rapport aux autres côtés.

Les deux butées 70 sont alignées entre les fentes 5 des branches latérales 4. De cette façon, lorsqu'un module de raccordement électrique est assemblé avec un tel dispositif de fixation, c'est-à-dire lorsqu'une portion en saillie du module de raccordement électrique est insérée dans les fentes 5 des branches latérales 4 du dispositif de fixation, la portion en saillie du module de raccordement électrique est maintenue entre les éléments de verrouillage 6 et les butées 70 des moyens de compensation de jeux 7. En effet, l'élasticité intrinsèque des butées 70 permet d'exercer une force en direction des éléments de verrouillage 6 et ainsi de réduire le jeu éventuel entre la portion en saillie du raccordement électrique et le dispositif de fixation.

Par ailleurs, dans cet exemple illustré, chaque branche latérale 4 comporte deux gorges 8 de part et d'autre de la fente 5, s'étendant de la première extrémité 41 à la deuxième extrémité 42 de la branche latérale 4. Les deux gorges 8 des deux portions latérales forment ainsi deux paires de gorges 8, une paire de gorges 8 comprenant une gorge 8 de chaque branche latérale 4 en regard l'une de l'autre. Lesdites paires de gorges 8 sont destinées à recevoir une collerette de couleur utilisée pour le repérage des modules de raccordement électrique. Seule une paire de gorges 8 est utilisée selon le sens dans lequel le module de raccordement électrique est monté sur le dispositif de fixation.

Dans ce premier mode de réalisation, le dispositif de fixation est destiné à être monté sur un rail R, et l'embase 1 comprend pour cela des moyens de fixations destinés à coopérer avec des moyens de fixation complémentaire prévus sur le rail.

L'assemblage sur le rail R, ainsi que le rail R seront décrits plus en détails dans les figures suivantes.

Sur les figures 1 à 3, on peut observer que l'embase 1 comprend une première face latérale 9 et une deuxième face latérale 10 opposée à la première face latérale 9.

Dans cet exemple, la première face latérale 9 est munie de trois bossages 11. La première face latérale 9 peut ne comprendre qu'un bossage 11 ou plus. Ces bossages 11 sont destinés à s'engager respectivement dans trois empreintes 12 pratiquées dans une aile longitudinale 13 du rail R.

La première face latérale 9 comprend également trois butées de verrouillage axial 14 en saillie. La première face latérale 9 peut ne comprendre qu'une butée de verrouillage axial 14. Les butées de verrouillage axial 14 sont destinées à coopérer respectivement avec trois éléments de verrouillage axial complémentaires 15 pratiqués dans la première aile 13 du rail R afin d'empêcher le dispositif de fixation de se déplacer axialement le long du rail R.

Dans ce premier mode de réalisation, chaque bossage 11 de la première face latérale 9 est disposé à la base de l'embase 1, sous une butée de verrouillage axial 14.

La deuxième face latérale 10 est pourvue de deux éléments d'encliquetage 16. La deuxième face latérale 10 peut ne comprendre qu'un seul élément d'encliquetage 16 ou plus. Un élément d'encliquetage 16 peut s'étendre sur toute la longueur de la deuxième face latérale 10. Les deux éléments d'encliquetage 16 sont adaptés pour coopérer respectivement avec deux éléments d'encliquetage complémentaires 17 pratiqués dans une deuxième aile 18 du rail R.

La combinaison des éléments d'encliquetage 16 avec les bossages 11 du dispositif de fixation permet, en coopération avec les éléments d'encliquetage complémentaires 17 et les empreintes 12, de maintenir le dispositif de fixation encliqueter dans le rail R.

Comme illustré sur les figures 1 et 2, chaque élément d'encliquetage 16 comporte une rainure 19 orientée parallèlement à la première face 2 de l'embase 1 dans laquelle s'engage une nervure d'encliquetage 20 de l'élément d'encliquetage complémentaire 17 pratiquée dans la deuxième aile 18 du rail R.

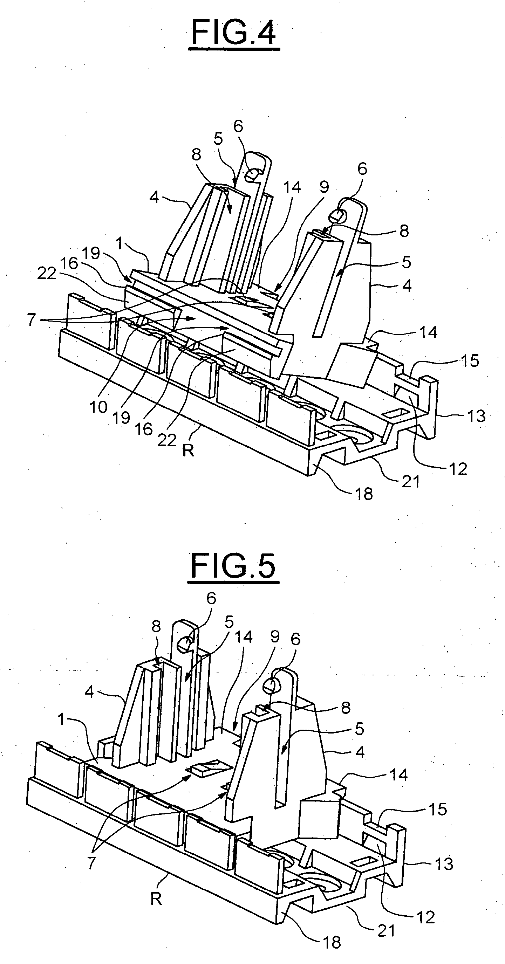

Les figures 4 à 6 illustrent de manière schématique l'assemblage d'un dispositif de fixation selon un premier mode de réalisation avec un premier rail.

Le premier rail R, réalisé en matériau composite, possède une section de forme générale en U comprenant une première aile 13 et une deuxième aile 14 reliées par une portion transverse 21.

Comme cela est illustré sur les figure 4 et 5, la première aile 13 comprend des éléments de verrouillage axial complémentaires 15 capables de coopérer avec les butées de verrouillage axial 14 d'un dispositif de fixation, et des empreintes 12 capables de coopérer avec les bossages 11. Les empreintes 12 sont disposées le long du premier rail R sous les éléments de verrouillage axial complémentaires 15. Les éléments de verrouillage axial complémentaires 15 sont réalisés sous la forme de créneaux.

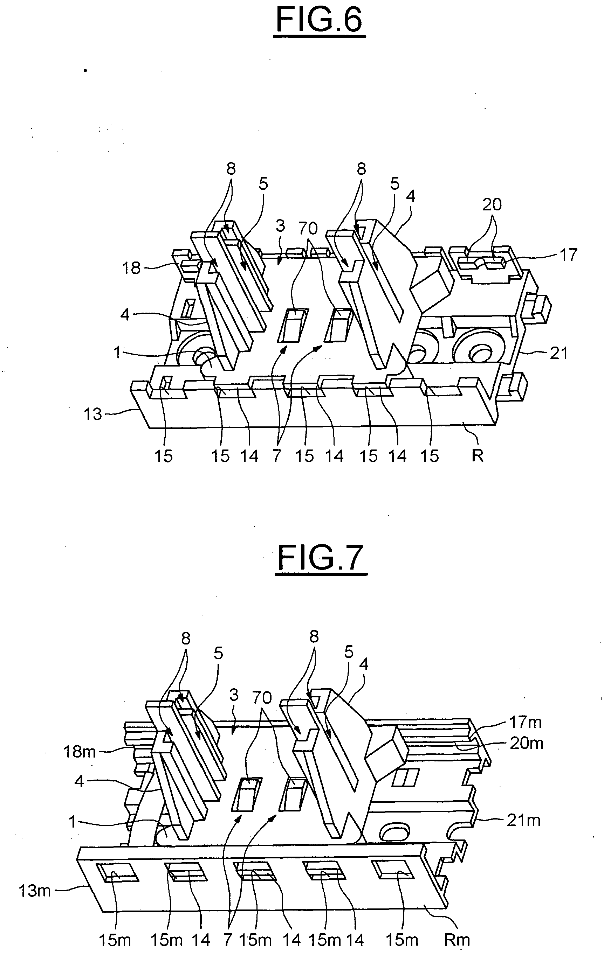

Comme cela est illustré sur la figure 6 qui correspond à une rotation de 180° de la figure 5, la deuxième aile 18 du premier rail R comprend des éléments d'encliquetage complémentaires 17 comportant deux nervures d'encliquetage 20 destinées à s'encliqueter dans une rainure 19 de la seconde face latérale 10 de l'embase 1 du dispositif de fixation. Afin de faciliter l'insertion du dispositif de fixation dans le premier rail R, la base de la seconde face latérale 10 de l'embase 1 est biseautée de manière à comprendre un chanfrein 22 à la base de chaque élément d'encliquetage 16.

L'assemblage du dispositif de fixation sur le premier rail R est réalisé en faisant coopérer les butées de verrouillage axial 14 de l'embase 1 avec les éléments de verrouillage axial complémentaires 15, c'est-à-dire, dans cet exemple avec le premier rail R, en positionnant les butées de verrouillage axial 14 en appui sur les créneaux 15, comme illustré sur la figure 4.

Puis, on pivote le dispositif de fixation autour d'un axe de rotation défini par les butées de verrouillage axial 14 jusqu'à ce que les nervures d'encliquetage 20 des éléments d'encliquetage complémentaires 17 soient encliquetées dans les rainures 19 correspondantes des éléments d'encliquetage 16, comme illustré sur les figures 5 et 6, tandis que les bossages 11 du dispositif de fixation s'imbriquent dans les empreintes 12 correspondantes de la première aile 13 du premier rail R.

Sur la figure 7 est illustré de manière schématique l'assemblage d'un dispositif de fixation selon un premier mode de réalisation avec un deuxième rail.

Le dispositif de fixation est identique aux figures 1 à 6.

Le deuxième rail Rm est un rail métallique comprenant une première aile 13m comportant des empreintes 12 et des éléments de verrouillage axial complémentaires 15m possédant une forme générale de fenêtre, une deuxième aile 18m comportant des éléments complémentaires d'encliquetage 17m comportant une nervure 20m disposée sur toute la longueur de la deuxième aile 18m, et une portion transverse 21m reliant la première et la deuxième ailes 13m et 18m.

L'assemblage du dispositif de fixation sur le second rail Rm est réalisé en insérant les butées de verrouillage axial 14 dans les fenêtres 15m, puis en pivotant le dispositif de fixation autour d'un axe de rotation défini par les butées de verrouillage axial 14 jusqu'à ce que la nervure d'encliquetage 20m de la seconde aile 18m du second rail Rm soit encliquetée dans les rainures 19 des éléments d'encliquetage 16, comme illustré sur la figure 7, tandis que les bossages 11 du dispositif de fixation s'imbriquent dans les empreintes 12 correspondantes de la première aile 13m du second rail Rm.

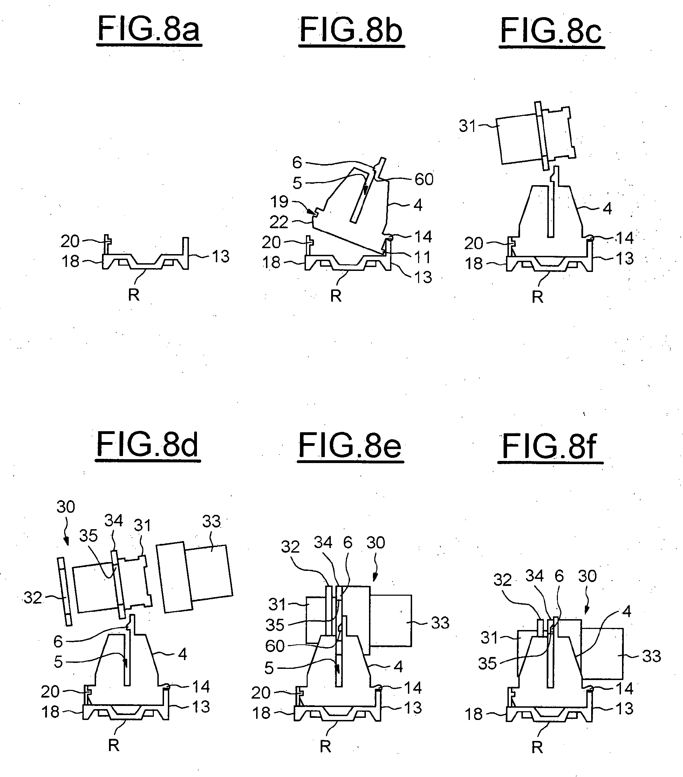

Les figures 8a à 8e illustrent un synopsis d'un assemblage d'un module de raccordement électrique sur un dispositif de fixation selon le premier mode de réalisation, lui-même fixé sur un premier rail R.

Dans une première étape, on vient fixer le dispositif de fixation sur un premier rail R illustré sur la figure 8a. Pour cela, on dispose les butées de verrouillage axial 14 en appui sur les éléments de verrouillage axial complémentaires 15 de la première aile 13, comme illustré sur la figure 8b. Puis on pivote le dispositif de fixation autour de l'axe de rotation défini par les butées de verrouillage axial 14 jusqu'à ce que les nervures d'encliquetage 20 des éléments d'encliquetage complémentaires 17 de la seconde aile 18 soient encliquetées dans les rainures 19 correspondantes des éléments d'encliquetage 16, comme illustré sur la figure 8c, tandis que les bossages 11 du dispositif de fixation s'imbriquent dans les empreintes 12 correspondantes de la première aile 13 du premier rail R.

Un module de raccordement électrique 30 comportant un assemblage d'un connecteur électrique 31, d'une collerette de repérage 32 et d'un adaptateur 33, comme cela est illustré sur la figure 8d, est inséré dans le dispositif de fixation. Le connecteur électrique 31 comprend une portion en saillie 34 comprenant une encoche 35 destinée à venir coopérer avec l'épaulement 60 de l'élément de verrouillage 6 du dispositif de fixation

Pour cela, comme illustré sur la figure 8e, le module de raccordement électrique est assemblé de manière à ce que la collerette de repérage 32 s'insère dans une des gorges 8, et la portion en saillie 34 du connecteur électrique 31 s'insère dans la fente 5 jusqu'à ce que l'épaulement 60 de l'élément de verrouillage 6 soit en appui sur l'encoche 35.

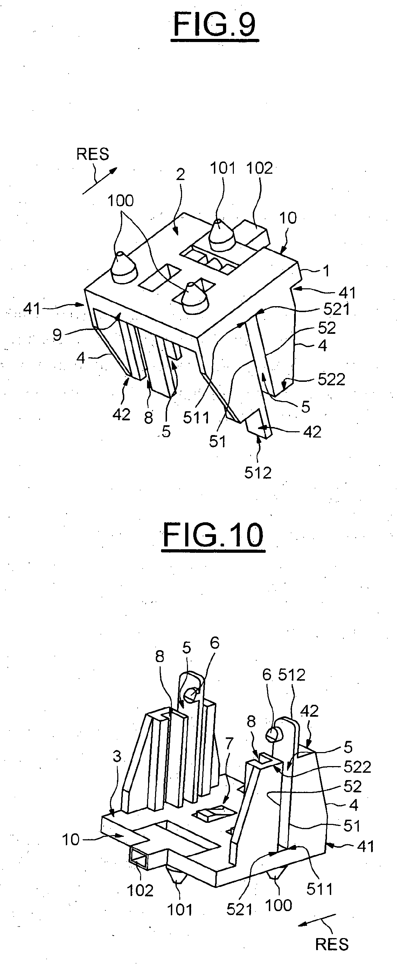

Les figures 9 et 10 illustrent de manière schématique une vue en perspective de dessous et une vue en perspective de dessus d'un dispositif de fixation selon un second mode de fixation.

Les éléments identiques au premier mode de réalisation portent les mêmes références que sur les figures 1 à 8.

Ainsi, dans ce second mode de réalisation, le dispositif de fixation comprend une embase 1 comportant une première face 2 destinée à être tournée vers le support et une seconde face 3 opposée à la première face 2, et une première face latérale 9 et une deuxième face latérale 10 opposée à la première face latérale 9. La seconde face 3 comprend deux branches latérales 4 en saillie en regard l'une de l'autre comprenant chacune une première extrémité 41 s'étendant à partir de la seconde face 3 de l'embase 1, une seconde extrémité opposée libre 42, et une fente 5 verticale s'étendant de la première extrémité 41 et débouchant au niveau de la seconde extrémité 42, ainsi que des éléments de compensation de jeu 7. La seconde extrémité 512 de la première paroi 51 de chaque branche latérale 4 comporte également un élément de verrouillage 6.

Dans ce second mode de réalisation, le dispositif de fixation est destiné à être monté sur une structure comprenant des orifices de fixation. L'embase 1 comprend pour cela des moyens de fixations destinés à coopérer avec ces orifices de fixation.

Dans cet exemple, l'embase 1 comprend deux pions fixes 100 en saillie destinés à coopérer avec les orifices et un pion 101 mobile dans une direction de résistance RES parallèle à la première face 2 de l'embase 1 et orthogonale à la direction définie par les deux pions fixes 100 de façon à ce que les pions fixes et mobile 100 et 101 exercent conjointement, grâce à des moyens élastiques tels qu'un ressort, une force de maintien transverse dans ladite direction de résistance RES.

Sur la figure 9, la direction définie par les deux pions fixes 100 est parallèle au premier côté latérale 9.

La seconde face latérale 10 de l'embase 1 comprend des moyens de déverrouillage 102. Ces moyens de déverrouillage 102 sont en saillie à partir de la seconde face latérale 10, et sont solidaires du pion mobile 101. Les moyens de déverrouillage 102 comportent un ressort capable de solliciter les moyens de déverrouillage 102 vers l'extérieur de l'embase 1 dans ladite direction de résistance RES.

Pour monter le dispositif de fixation selon le second mode de réalisation sur une structure comportant des orifices de fixation, on appui sur les moyens de déverrouillage 102 de manière à comprimer le ressort. On insère ensuite les deux pions fixes 100 dans deux orifices et le pion mobile 101 dans un orifice correspondant. Puis, pour maintenir le dispositif de fixation en place, on relâche les moyens de déverrouillage 102 de façon à décompresser le ressort. De cette manière, grâce à la force de rappel du ressort une force de résistance est exercée entre les deux pions fixes 100 et le pion mobile 101.

Le dispositif de fixation décrit dans ces modes de réalisation permet d'assembler, d'une part sur un rail, et d'autre part sur une structure comportant des orifices de fixation, un raccordement électrique dépourvu d'une configuration spécifique à une fixation sur rail ou un support perforé.

## Revendications

1. Dispositif de fixation d'un module de raccordement électrique (30) de conducteurs, comprenant une embase (1) comportant des moyens de fixation destinés à coopérer avec des moyens de fixation complémentaires prévus sur un support, et deux branches latérales (4) s'étendant en saillie en regard l'une de l'autre à partir de l'embase (1) et comprenant des moyens de réception du module de raccordement électrique (30), et dans lequel chaque branche latérale (4) comporte une première extrémité (41) s'étendant à partir de l'embase (1) et une seconde extrémité opposée libre (42), chaque branche latérale (4) comportant une fente (5) verticale s'étendant de la première extrémité (41) et débouchant au niveau de la seconde extrémité (42), la fente (5) étant destinée à recevoir une portion en saillie (34) du module de raccordement électrique (30), **caractérisé en ce que** la seconde extrémité (42) de chaque branche latérale (4) comporte un élément de verrouillage (6) capable de maintenir ladite portion en saillie (34) du module de raccordement électrique (30) dans la fente (5).

2. Dispositif selon la revendication 1, dans lequel l'embase (1) comporte au niveau de l'une de ses faces destinée à être tournée à l'opposé du support des éléments de compensation de jeu (7) aptes à solliciter ladite portion en saillie (34) du module de raccordement électrique (30) vers les éléments de verrouillage (6).

3. Dispositif selon la revendication 2, dans lequel l'élément de verrouillage (6) comprend une butée d'extrémité (60) contre laquelle s'appuie une portion correspondante (35) de ladite portion en saillie (34) du module de raccordement électrique (30) sous l'action des éléments de compensation de jeu (7).

4. Dispositif selon l'une des revendications 1 à 3, dans lequel ladite embase (1) comprend au moins un bossage (11) destiné à s'engager dans au moins une empreinte (12) correspondante pratiquée dans un rail (R) en forme de U, au moins un élément d'encliquetage (16) disposé à l'opposé du bossage (11) et adapté pour coopérer avec un élément d'encliquetage complémentaire (17) pratiqué dans le rail (R), au moins une butée de verrouillage axial (14) étant destinée à coopérer avec un élément de verrouillage axial complémentaire (15) pratiqué dans le rail (R).

5. Dispositif selon la revendication 4, dans lequel le bossage (11) est pratiqué à la base de l'embase (1).

6. Dispositif selon l'une des revendication 4 ou 5, dans lequel l'élément d'encliquetage (16) comporte une rainure (19) dans laquelle s'engage au moins une nervure d'encliquetage (20) de l'élément d'encliquetage complémentaire (17) pratiquée dans la deuxième aile (18) du rail (R).

7. Dispositif selon l'une des revendications 1 à 4, dans lequel l'embase (1) comprend au moins un pion fixe (100) en saillie à partir de l'une des faces de l'embase (1) destinée à être tournée vers le support et à coopérer chacun avec un orifice pratiqué dans le support, et un pion mobile (101) associé à des moyens élastiques tendant à écarter le pion mobile (101) dudit au moins un pion fixe (100) de manière à exercer un effort de maintien des pions (100 et 101) dans les orifices.

8. Dispositif selon la revendication 7, dans lequel le pion mobile est porté par un tiroir mobile par rapport à l'embase (1) entre une position active de maintien du dispositif dans le support et une position initiale de compression des moyens élastiques et de libération du dispositif.

## Patentansprüche

1. Vorrichtung zum Befestigen eines elektrischen Verbindungsmoduls (30) für Leiter, die einen Sockel (1), der Befestigungsmittel aufweist, die dazu bestimmt sind, mit komplementären Befestigungsmitteln zusammenzuwirken, die an einem Träger vorgesehen sind, und zwei seitliche Schenkel (4), die sich einander gegenüber vorstehend von dem Sockel (1) erstrecken und Mittel zum Aufnehmen des elektrischen Verbindungsmoduls (30) aufweisen, umfasst, wobei jeder seitliche Schenkel (4) ein erstes Ende (41), das sich von dem Sockel (1) erstreckt, und ein freies gegenüberliegendes zweites Ende (42) aufweist, wobei jeder seitliche Schenkel (4) einen vertikalen Schlitz (5) aufweist, der sich von dem ersten Ende (41) erstreckt und auf Höhe des zweiten Endes (42) mündet, wobei der Schlitz (5) dazu vorgesehen ist, einen vorstehenden Abschnitt (34) des elektrischen Verbindungsmoduls (30) aufzunehmen, **dadurch gekennzeichnet, dass** das zweite Ende (42) jedes seitlichen Schenkels (4) ein Verriegelungselement (6) umfasst, das den vorstehenden Abschnitt (34) des elektrischen Verbindungsmoduls (30) in dem Schlitz (5) halten kann.

2. Vorrichtung nach Anspruch 1, wobei der Sockel (1) auf Höhe einer seiner Flächen, die dazu bestimmt ist, von dem Träger abgewandt zu sein, Spielausgleichselemente (7) umfasst, die den vorstehenden Abschnitt (34) des elektrischen Verbindungsmoduls (30) zu den Verriegelungselementen (6) drängen können.

3. Vorrichtung nach Anspruch 2, wobei das Verriegelungselement (6) einen Endanschlag (60) umfasst, an dem sich ein entsprechender Abschnitt (35) des vorstehenden Abschnitts (34) des elektrischen Verbindungsmoduls (30) unter der Wirkung der Spielausgleichselemente (7) abstützt.

4. Vorrichtung nach einem der Ansprüche 1 bis 3, wobei der Sockel (1) wenigstens eine Erhebung (11), die dazu bestimmt ist, mit wenigstens einer entsprechenden Vertiefung (12), die in einer U-förmigen Schiene (R) ausgebildet ist, in Eingriff zu gelangen, und wenigstens ein Einrastelement (16), das gegenüber der Erhebung (11) angeordnet ist und dafür ausgelegt ist, mit einem komplementären Einrastelement (17) zusammenzuwirken, das in der Schiene (R) ausgebildet ist, umfasst, wobei wenigstens ein axialer Verriegelungsanschlag (14) dazu bestimmt ist, mit einem komplementären axialen Verriegelungselement (15), das in der Schiene (R) ausgebildet ist, zusammenzuwirken.

5. Vorrichtung nach Anspruch 4, wobei die Erhebung (11) an der Basis des Sockels (1) ausgebildet ist.

6. Vorrichtung nach einem der Ansprüche 4 oder 5, wobei das Einrastelement (16) eine Rille (19) umfasst, in der wenigstens eine Einrastrippe (20) des komplementären Einrastelements (17), das in dem zweiten Flügel (18) der Schiene (R) ausgebildet ist, in Eingriff ist.

7. Vorrichtung nach einem der Ansprüche 1 bis 4, wobei der Sockel (1) wenigstens einen festen Höcker (100), der von einer der Flächen des Sockels (1) vorsteht, die dazu bestimmt ist, dem Träger zugewandt zu sein und jeweils mit einer in dem Träger ausgebildeten Öffnung zusammenzuwirken, und einen beweglichen Höcker (101), der elastischen Mitteln zugeordnet ist, die bestrebt sind, den beweglichen Höcker (101) von dem wenigstens einen festen Höcker (100) zu beabstanden, derart, dass auf die Höcker (100 und 101) in den Öffnungen eine Haltekraft ausgeübt wird, umfasst.

8. Vorrichtung nach Anspruch 7, wobei der bewegliche Höcker von einem Stift getragen wird, der in Bezug auf den Sockel (1) zwischen einer aktiven Position zum Halten der Vorrichtung in dem Träger und einer anfänglichen Position zum Komprimieren elastischer Mittel und zum Freigeben der Vorrichtung beweglich ist.

## Claims

1. Device for fixing an electrical connection module (30) for conductors, comprising a base (1) comprising fixing means intended to cooperate with complementary fixing means provided on a support, and two lateral branches (4) extending as protuberances facing one another from the bace (1) and comprising means for receiving the electrical connection module (30), and in which each lateral branch (4) comprises a first extremity (41) extending from the base (1) and a second, free opposite extremity (42), each lateral branch (4) comprising a vertical slit (5) extending from the first extremity (41) and emerging at the second extremity (42), the slit (5) being intended to receive a protruding portion (34) of the electrical connection module (30), **characterized in that** the second extremity (42) of each lateral branch (4) comprises a locking element (6) capable for holding said protruding portion (34) of the electrical connection module (30) in the slit (5).

2. Device according to Claim 1, in which the base (1) comprises, on one of its faces intended to be turned away from the support, play compensation elements (7) capable of stressing said protruding portion (34) of the electrical connection module (30) towards the locking elements (6).

3. Device according to Claim 2, in which the locking element (6) comprises an extremity abutment (60) against which a corresponding portion (35) of said protruding portion (34) of the electrical connection module (30) bears under the action of the play compensation elements (7).

4. Device according to one the Claims 1 to 3, in which said base (1) comprises at least one boss (11) intended to be engaged in at least one corresponding imprint (12) formed in a U-shaped rail (R), at least one snap-fitting element (16) arranged opposite the boss (11) and suitable for cooperating with a complementary snap-fitting element (17) formed in the rail (R), at least one axial locking abutment (14) being intended to cooperate with a complementary axial locking element (15) formed in the rail (R).

5. Device according to Claim 4, in which the boss (11) is formed at the bottom of the base (1).

6. Device according to one of Claims 4 or 5, in which the snap-fitting element (16) comprises a groove (19) into which at least one snap-fitting rib (20) of the complementary snap-fitting element (17) formed in the second wing (18) of the rail (R) engages.

7. Device according to one of Claims 1 to 4, in which the base (1) comprises at least one fixed pin (100) protruding from one of the faces of the base (1) intended to be turned towards the support and to each cooperate with an orifice formed in the support, and a mobile pin (101) associated with elastic means tending to separate the mobile pin (101) from said at least one fixed pin (100) so as to exert a force for holding pins (100 and 101) in the orifices.

8. Device according to Claim 7, in which the mobile pin is borne by a slide that is mobile relative to the base (1) between an active position holding device in the support and an initial position of compression of elastic means and of releasing of device.
